# EUROPÄISCHE PATENTSCHRIFT

(11) **EP 1 162 248 B1**
(45) Veröffentlichungstag und Bekanntmachung des Hinweises auf die Patenterteilung: **03.05.2006**
(21) Anmeldenummer: 01113468.1
(22) Anmeldetag: 02.06.2001
(51) Int. Cl.: C09J 7/02, B05B 15/04

(54) **Abdeckmittel für Mal- und Lackierarbeiten**
Covering for painting operations
Elément de couverture pour opérations de peinture

(30) Priorität: 06.06.2000 DE 20010122 U
(43) Veröffentlichungstag der Anmeldung: 12.12.2001
(73) Patentinhaber: Supertape B.V., 4879 AP Etten-Leur (NL)
(72) Erfinder: Leeuwenburgh, Peter, 4171 BA Herwijnen (NL)
(74) Vertreter: Selting, Günther

(56) Entgegenhaltungen:
- EP-A- 0 999 251
- DE-U- 29 617 896
- DE-U- 29 619 424

## Beschreibung

Die Erfindung bezieht sich auf ein Abdeckmittel für Mal- und Lackierarbeiten zum Abdecken von vor Farbe und Verschmutzung zu schützenden Flächen.

Abdeckmittel für Mal- und Lackierarbeiten werden von Malern und Lackierern verwendet, um beim Malen und Lackieren Fahrzeugteile, Wände und andere Flächen abzuschirmen, die vor Farbe und Verschmutzung geschützt werden müssen. Als Abdeckmittel werden u.a. saugfähige Materialbahnen, beispielsweise Papierbahnen verwendet, die Farben und Lacke gut aufsaugen können. Allerdings kann ein Durchnässen des Papiers selbst bei größeren Papierdicken nicht vollständig ausgeschlossen werden. Kunststoff-Abdeckfolien können nicht durchnässen, jedoch bieten sie wenig Haftung für Farben und Lacke, so dass die Farbe bzw. der Lack von der Kunststofffolie auf die bearbeitete Fläche laufen kann. Ferner trocknet die Farbe bzw. der Lack auf Kunststofffolien etwas langsamer, so dass die Abdeckfolie erst nach einer langen Trocknungszeit gefahrlos wieder entfernt werden kann. Aus DE 296 17 896 U1 ist ein Abdeckmittel bekannt, das vollflächig aus mit einer Kunststoffschicht hinterlegtem Papier gebildet wird. Aus EP 0 999 251 ist ein Abdeckmittel bekannt, in dem an einem Längsrand einer flüssigkeitsdichten Kunststoff-Abdeckfolie eine Papierbahn angebracht ist, die schmaler als die Abdeckfolie ist. Durch die Papierbahn werden die im Randbereich auftretenden relativ großen Farbspritzer aufgesaugt und festgehalten. Durch die hinterlegte flüssigkeitsdichte Abdeckfolie wird ein Durchnässen bis zur abzuschirmenden Fläche jedoch verhindert und eine großflächige Abdeckung gewährleistet. Um eine ausreichende mechanische Festigkeit der Papierbahn sicherzustellen, muss das Papier eine Stärke von mindestens 30 bis 40 g/m² aufweisen. Derartiges Papier ist relativ dick und steif. Beim Aufkleben des Abdeckmittels führt dies insbesondere im Bereich von Kurven und Rundungen zu einem Abstehen der Papierbahn, die sich aufgrund ihrer Steifheit nicht an die Rundungen anpassen kann.

Aufgabe der Erfindung ist es, die Handhabung im Randbereich eines Abdeckmittels, das aus einer flüssigkeitsdichten Kunststoff-Abdeckfolie und einer saugfähigen Materialbahn besteht, zu verbessern.

Diese Aufgabe wird erfindungsgemäß mit den Merkmalen des Anspruchs 1 gelöst.

Bei dem erfindungsgemäßen Abdeckmittel ist die saugfähige Materialbahn auf ihrer der Abdeckfolie zugewandten Seite mit einer Kunststoffschicht beschichtet. Durch die aufgebrachte Kunststoffschicht ist die saugfähige Materialbahn insbesondere bei Durchnässung mit Farbe bzw. Lack so verfestigt, dass sie in ihrer Materialstärke erheblich reduziert werden kann. Die saugfähige Materialbahn und die Kunststoffschicht zusammen können bei verbesserter Festigkeit dünner aufgebaut sein als eine saugfähige Materialbahn ohne Kunststoffbeschichtung. Dadurch wird die saugfähige Materialbahn flexibler, so dass sie sich auch im Bereich von Kurven und Rundungen der zu schützenden Fläche besser anpasst und weniger von der Kunststoff-Abdeckfolie bzw. der abzudeckenden Fläche absteht. Durch die geringere Gesamtdicke der saugfähigen Materialbahn einschließlich der Kunststoffschicht ergibt sich auch eine geringere Gesamtdicke der saugfähigen Materialbahn und der Kunststoff-Abdeckfolie, so dass ein geringeres Gewicht und kleinere Packungsmaße bzw. größere Abrolllängen realisierbar sind. Die Kunststoffbeschichtung der saugfähigen Materialbahn bietet ferner zusätzliche Sicherheit gegen Durchdringen der Farbe durch Löcher in der Abdeckfolie.

Die saugfähige Materialbahn besteht aus Papier mit einem Gewicht von 10 bis 30 g/m². Durch die verfestigende Kunststoffschicht kann das Gewicht und die Stärke der saugfähigen Materialbahn gegenüber einer nicht verstärkten saugfähigen Materialbahn deutlich verringert werden. Hierdurch werden Gewicht und Verpackungsvolumen verkleinert.

Die Kunststoffschicht der saugfähigen Materialbahn und die Abdeckfolie sind derart elektrisch geladen, dass sie sich gegenseitig anziehen. Die saugfähige Materialbahn mit ihrer Kunststoffschicht schmiegt sich an die Kunststoff-Abdeckfolie an, so dass die saugfähige Materialbahn nicht mehr von der Kunststofffolie absteht. Die Kunststoff-Abdeckfolie neigt durch ihre elektrische Aufladung ferner dazu, auch an der abzudeckenden Fläche zu haften, so dass sich sowohl die Abdeckfolie als auch die Materialbahn eng an die abzudeckende Fläche anschmiegen. Dadurch wird ein Abstehen der saugfähigen Materialbahn von der abzuschirmenden Fläche und ein Abheben der saugfähigen Materialbahn durch den Luftstrahl einer Sprühpistole vermieden.

Vorzugsweise ist die Kunststoffschicht eine Polyethylenschicht. Die Kunststoffschicht weist vorzugsweise eine Stärke von 5 bis 15 g/m² auf. Eine Kunststoffschicht der genannten Stärke bewirkt eine Verfestigung der saugfähigen Materialbahn, gewährt auch einen Schutz gegen Durchnässung der saugfähigen Materialbahn und kann elektrisch aufgeladen werden. Die Kunststoffschicht ist vorzugsweise 0,0055 bis 0,016 mm dick.

Gemäß einer bevorzugten Ausgestaltung besteht die saugfähige Materialbahn aus kurzfaserigem Zellstoff oder Papier. Kurzfaserige Papier- oder Zellstoffbahnen zeichnen sich durch eine geringe Steifheit und gute Saugfähigkeit aus, so dass sich die saugfähige Materialbahn problemlos an Rundungen und Kurven der abzuschirmenden Fläche anpassen kann.

Gemäß einer bevorzugten Ausgestaltung ist die Abdeckfolie zu mehreren Lagen zusammengefaltet, wobei die Lagenbreite etwa gleich der Breite der saugfähigen Materialbahn ist. Die zusammengefaltete Abdeckfolie kann zusammen mit der saugfähigen Materialbahn zu einer abrollbaren Rolle zusammengerollt sein. Die Länge der Rolle entspricht also der Breite der saugfähigen Materialbahn zuzüglich der Klebebandbreite, während die zusammengefaltete Abdeckfolie Breiten von bis zu 3,5 m aufweisen kann. Wegen der geringen Dicke der saugfähigen Materialbahn einschließlich der Kunststoffschicht sind Materialbahnlängen von 20 m bis 50 m realisierbar.

Vorzugsweise ist der Klebestreifen ein Klebeband, auf dessen Klebeseite über einen Teil seiner Breite ein Längsrand der saugfähigen Materialbahn und, dazu seitlich versetzt, ein Längsrand der Abdeckfolie aufgeklebt ist. Das Klebeband kann als flexibles Flach-Kreppband ausgebildet sein, so dass auch enge Kurven exakt und konturenscharf abgeklebt werden können.

Gemäß einer bevorzugten Ausgestaltung ist auf das Klebeband seitlich versetzt ein Deckband aufgebracht. Das Deckband ist auf die kleberfreie Seite des Klebebandes aufgebracht, kann jedoch auch mit seiner kleberfreien Seite auf die Kleberseite des Klebebandes aufgebracht sein. In jedem Fall ist das Deckband seitlich versetzt zum Klebeband aufgebracht, so dass die Farbkante nur von dem Klebeband oder dem Deckband, nicht jedoch von beiden übereinanderliegenden Bändern gebildet wird. Die Farbkante ist auf diese Weise in ihrer Höhe nahezu halbiert, so dass der Farbübergang an der Farbkante kleinstufiger ausfällt. Die Dicke des Klebebandes und des Deckbandes zusammen entspricht ungefähr der Dicke der saugfähigen Materialbahn, ihrer Kunststoffschicht und der zusammengefalteten Abdeckfolienlagen, so dass beim Aufrollen ein zylindrischer Rollenkörper, und nicht ein konischer Rollenkörper, entsteht.

Gemäß einer bevorzugten Ausgestaltung ist die saugfähige Materialbahn bedruckt. Die Materialbahn kann mit einem Firmenlogo, der Produktbezeichnung und/oder Anwendungshinweisen bedruckt werden.

Im folgenden wird unter Bezugnahme auf die Zeichnungen ein Ausführungsbeispiel der Erfindung näher erläutert.

Es zeigen:
- Fig. 1: ein Abdeckmittel für Mal- und Lackierarbeiten mit einer zu mehreren Lagen zusammengefalteten Abdeckfolie,
- Fig. 2: das Abdeckmittel der Fig. 1 mit ausgezogener Abdeckfolie und auf eine abzuschirmende Fläche aufgebracht, und
- Fig. 3: das zu einer Rolle zusammengerollte Abdeckmittel der Fign. 1 und 2.

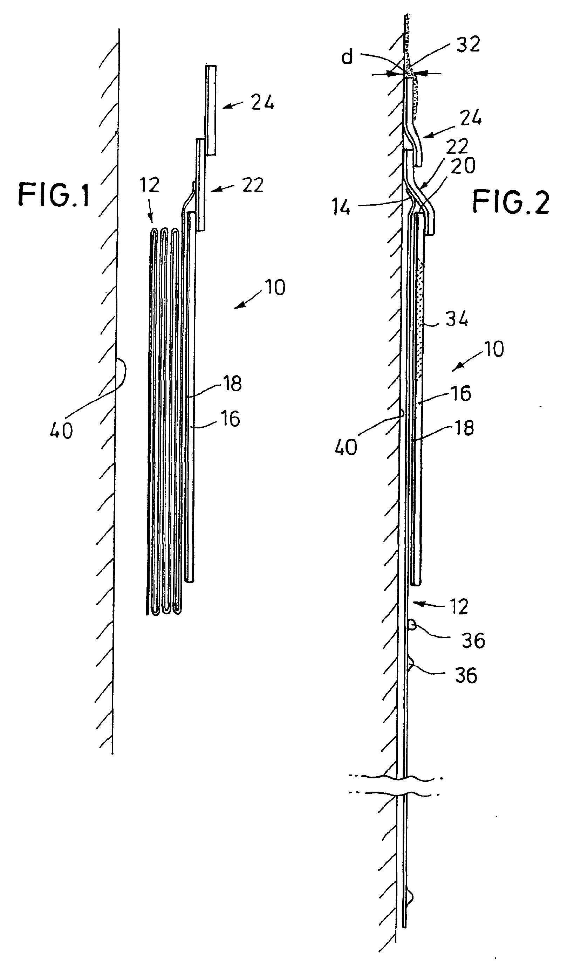

In den Fig. 1 - 3 ist ein Abdeckmittel 10 für Mal- und Lackierarbeiten dargestellt, wie es insbesondere für die Blech- bzw. Fahrzeugkarosserie-Lackierung geeignet ist. Das Abdeckmittel 10 besteht im wesentlichen aus einer dünnen und flüssigkeitsdichten Kunststoff-Abdeckfolie 12, die eine Breite von 0,5 m bis 3,5 m haben kann. Die Abdeckfolie 12 besteht aus einer dünnen aufgerauhten Polyethylenfolie, die je nach Breite zu zwei bis vier und zwanzig Lagen möglichst gleicher Breite zusammengefaltet ist.

An einem Längsrandstreifen 14 der Abdeckfolie 12 ist parallel zu dem Längsrandstreifen 14 und wenige Millimeter versetzt zu dem Längsrand eine saugfähige Materialbahn 16 vorgesehen, deren der Abdeckfolie 12 zugewandte Seite mit einer Kunststoffschicht 18 beschichtet ist. Die beschichtete Materialbahn 16 hat eine Breite von ungefähr 17 cm. Die beiden versetzt zueinander angeordneten Längsrandstreifen 14,20 der Abdeckfolie 12 und der saugfähigen Materialbahn 16 sind auf die Kleberseite eines Klebestreifens 22 um wenige Millimeter versetzt zueinander aufgeklebt. Der Klebestreifen. 22 ist ein Flach-Krepp-Klebeband. Auf das Krepp-Klebeband 22 ist seitlich um ca. 10 mm versetzt und parallel dazu ein Deckband 24 aufgeklebt, das gleich ausgebildet ist wie das Klebeband 22. Die Breite des Klebebandes 22,24 ist ungefähr 15 mm, so dass die Breite des Klebebandes 22 und des Deckbandes 24 zusammen ca. 23 mm beträgt.

Die saugfähige Materialbahn 16 besteht aus kurzfaserigem Zellstoff oder Papier und hat ein Gewicht von 20 g/m². Die Kunststoffschicht 18 an der Rückseite der saugfähigen Materialbahn 16 ist eine Polyethylenschicht von ungefähr 8 g/m². Die Kunststoffschicht 18 ist zwischen 0,0055 und 0,016 mm dick und gewährt eine hohe Zerreißfestigkeit in nassem Zustand. Die Kunststoffschicht 18 und die Kunststoff-Abdeckfolie 12 sind derart elektrisch geladen, dass sie sich gegenseitig anziehen.

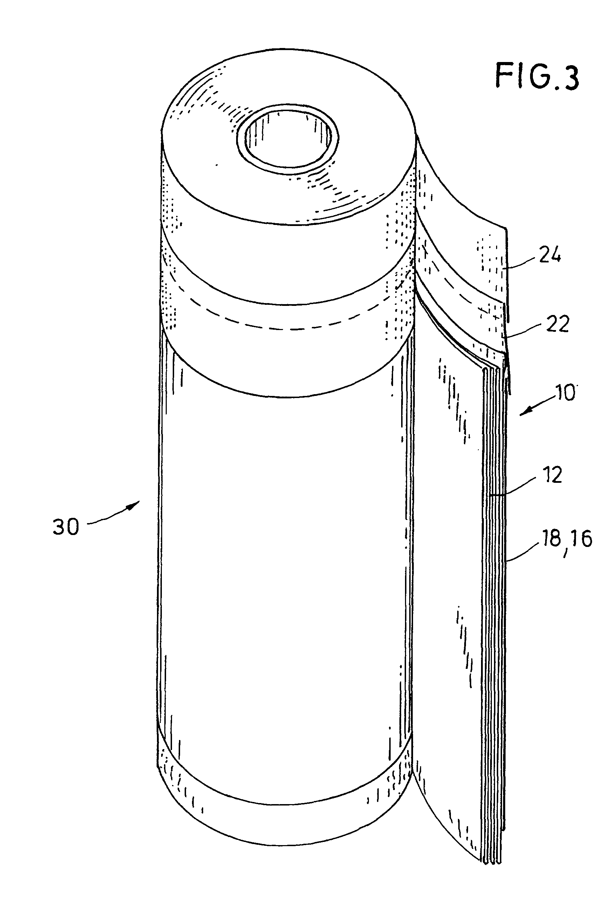

Die Vorderseite der saugfähigen Materialbahn 16 ist mit dem Produktnamen bedruckt, kann jedoch alternativ oder ergänzend auch mit Anwendungshinweisen bedruckt werden. Das Abdeckmittel ist zu einer zylindrischen Rolle 30 zusammengerollt, wie in Fig. 3 dargestellt. Das Klebeband 22 und das aufgebrachte Deckband 24 sind zusammen ungefähr so dick oder dicker wie alle Lagen der Abdeckfolie 12 und die saufähige Materialbahn einschließlich ihrer Beschichtung 18. Dadurch ist die Rolle 30 auch im Bereich der Klebebänder 22,24 etwa so dick oder dicker wie im Bereich der Abdeckfolien-Lagen. Die Länge des aufgerollten Abdeckmittels 10 beträgt 20 m, der Durchmesser der Rolle beträgt 75 mm.

Zur Applikation des Abdeckmittels 10 wird dieses aus einem zylinderförmigen Spender in der erforderlichen Länge ausgerollt und mit einem Messer an dem Spender von der Rolle 30 abgetrennt. Anschließend wird das Abdeckmittel 10 auf die abzuschirmende Fläche 40 aufgebracht und die Abdeckfolie 12 auf ihre gesamte Breite ausgezogen und dabei aufgefaltet.

Durch die elektrische Ladung der Kunststoff-Abdeckfolie 12 klebt ihre Rückseite förmlich an der abzuschirmenden Fläche 40 an. Die ebenfalls elektrisch geladene Kunststoffschicht 18 der saugfähigen Materialbahn 16 haftet wiederum an der Vorderseite der Abdeckfolie 12 an, so dass die Materialbahn 10 auch im Bereich von Rundungen, Kanten oder Wölbungen nicht von der abzuschirmenden Fläche 40 absteht, so dass der Sprühpistolen-Luftstrahl nicht verwirbelt wird oder die saugfähige Materialbahn 16 nicht von einem Sprühpistolen-Luftstrahl auf die abzuschirmende Fläche 40 umgeschlagen werden kann.

Wie in Fig. 2 dargestellt, kann die Dicke d der aufgebrachten Lackschicht 32 an der Kante zu dem Deckband 24 nur geringfügig größer als die Dicke von 80-130 um des Deckbandes 24 werden. Auf diese Weise werden verhältnismäßig kleinstufige Übergänge zwischen der Lackschicht 32 und der abzuschirmenden Fläche 40 geschaffen. Lackspritzer 34 im Bereich der saugfähigen Materialbahn 16 werden von der saugfähigen Materialbahn 16 aufgesogen und festgehalten, so dass sie nicht mehr von einem Sprühpistolen-Luftstrahl mitgenommen werden und verwischen können. Kleinere Lackspritzer und Tropfen 36 werden jenseits der saugfähigen Materialbahn 16 von der Abdeckfolie 12 abgefangen, die auf diese Weise die abzuschirmende Fläche 40 vor Lackspritzern schützt. Das Abdeckmittel 10 daher kann daher schon bald nach dem Lackieren gefahrlos wieder von der Fläche 40 abgezogen werden.

## Patentansprüche

1. Abdeckmittel für Mal- und Lackierarbeiten, mit
einer flüssigkeitsdichten Kunststoff-Abdeckfolie (12),
einer saugfähigen Materialbahn (16), die mit ihrem Längsrand (20) mit dem Längsrand (14) der Abdeckfolie (12) verbunden ist und die schmaler ist als die Abdeckfolie (12), und
einem Klebestreifen (22) an den Längsrändern (14,20) der Abdeckfolie (12) und der saugfähigen Materialbahn (16),
**dadurch gekennzeichnet,**
**dass** die saugfähige Materialbahn (16) auf ihrer der Abdeckfolie (12) zugewandten Seite mit einer Kunststoffschicht (18) beschichtet ist,
**dass** die saugfähige Materialbahn (16) aus Papier mit einem Gewicht von 10 bis 30 g/m² besteht, und
**dass** die Kunststoffschicht (18) der saugfähigen Materialbahn (16) und die Abdeckfolie (12) derart elektrisch geladen sind, dass sich die Kunststoffschicht (18) und die Abdeckfolie (12) gegenseitig anziehen.

2. Abdeckmittel nach Anspruch 1, **dadurch gekennzeichnet, dass** die Kunststoffschicht (18) der saugfähigen Materialbahn (16) eine Polyethylenschicht ist. - 10 -

3. Abdeckmittel nach einem der Ansprüche 1oder 2, **dadurch gekennzeichnet, dass** die Kunststoffschicht (18) eine Stärke von 5 bis 15 g/m² aufweist.

4. Abdeckmittel nach einem der Ansprüche 1-3, **dadurch gekennzeichnet, dass** die Kunststoffschicht (18) 0,0055 bis 0,016 mm dick ist.

5. Abdeckmittel nach einem der Ansprüche 1-4, **dadurch gekennzeichnet, dass** die Abdeckfolie (12) zu mehreren Lagen gefaltet ist, wobei die Lagenbreite etwa gleich der Breite der saugfähigen Materialbahn (16) ist und die zusammengefaltete Abdeckfolie (12) und die beschichtete Materialbahn (16) in Längsrichtung zu einer Rolle aufgerollt sind.

6. Abdeckmittel nach einem der Ansprüche 1-5, **dadurch gekennzeichnet, dass** der Klebestreifen (22) ein Klebeband ist, auf das der Abdeckfolienlängsrand (14) und der Materialbahn-Längsrand (20) versetzt zueinander aufgeklebt sind.

7. Abdeckmittel nach Anspruch 6, **dadurch gekennzeichnet, dass** auf das Klebeband (22) ein klebendes Deckband (24) aufgebracht ist.

8. Abdeckmittel nach Anspruch 7, **dadurch gekennzeichnet, dass** das Deckband (24) seitlich versetzt auf das Klebeband (22) aufgeklebt ist.

9. Abdeckmittel nach einem der Ansprüche 1-8, **dadurch gekennzeichnet, dass** die saugfähige Materialbahn (16) bedruckt ist.

## Revendications

1. Elément de protection pour travaux de peinture et de laquage, comprenant
une feuille de protection en matière plastique (12) étanche aux liquides,
une bande de matière absorbante (16) qui est assemblée par son bord longitudinal (20) au bord longitudinal (14) de la feuille de protection (12) et qui est plus étroite que la feuille de protection (12), et
une bande adhésive (22) le long des bords longitudinaux (14, 20) de la feuille de protection (12) et de la bande de matière absorbante (16),
**caractérisé**
**en ce que** la bande de matière absorbante (16) est revêtue d'une couche de matière plastique (18) sur sa face dirigée vers la feuille de protection (12),
**en ce que** la bande de matière absorbante (16) est composée de papier d'un poids de 10 à 30 g/m², et
**en ce que** la couche de matière plastique (18) de la bande de matière absorbante (16) et la feuille de protection (12) sont chargées électriquement de manière que la couche de matière plastique (18) et la feuille de protection (12) s'attirent mutuellement.

2. Elément de protection selon la revendication 1, **caractérisé en ce que** la couche de matière plastique (18) de la bande de matière absorbante (16) est une couche de polyéthylène. -10 -

3. Elément de protection selon une des revendications 1 ou 2, **caractérisé en ce que** la couche de matière plastique (18) présente une résistance de 5 à 15 g/m².

4. Elément de protection selon une des revendications 1-3, **caractérisé en ce que** la couche de matière plastique (18) a une épaisseur de 0,0055 à 0,016 mm.

5. Elément de protection selon une des revendications 1-4, **caractérisé en ce que** la feuille de protection (12) est repliée en plusieurs couches, la largeur des couches étant à peu près égale à la largeur de la bande de matière absorbante (16) et **en ce que** la feuille de protection (12) repliée et la bande de matière revêtue (16) sont enroulées dans la direction longitudinale pour former un rouleau.

6. Elément de protection selon une des revendications 1-5, **caractérisé en ce que** la bande adhésive (22) est un ruban adhésif sur lequel le bord longitudinal (14) de la feuille de protection et le bord longitudinal (20) de la bande de matière sont collés ensemble avec un décalage.

7. Elément de protection selon la revendication 6, **caractérisé en ce qu'**un ruban de recouvrement adhésif (24) est appliqué sur le ruban adhésif (22).

8. Elément de protection selon la revendication 7, **caractérisé en ce que** le ruban de recouvrement (24) est collé sur le ruban adhésif (22) avec un décalage latéral.

9. Elément de protection selon une des revendications 1-8, **caractérisé en ce que** la bande de matière absorbante (16) est imprimée.

## Claims

1. A masking means for paint works, comprising
a liquid-tight sheeting (12) of plastic material,
an absorbent material web (16) connected along its longitudinal edge (20) with the longitudinal edge (14) of the sheeting (12) and being narrower than the sheeting (12),
an adhesive strip (22) on the longitudinal edges (14, 20) of the sheeting (12) and the absorbent material web (16),
**characterized in**
**that** the absorbent material web (16) is coated with a plastic layer on its side facing the masking means (12),
**that** the absorbent material web (16) is made of paper with a weight of 10 to 30 g/m², and
**that** the plastic layer (18) of the absorbent material web (16) and the sheeting (12) are charged electrically such that the plastic layer (18) and the sheeting (12) attract each other.

2. The masking means of claim 1, **characterized in that** the plastic layer (18) of the absorbent material web (16) is a layer of polyethylene.

3. The masking means of one of claims 1 or 2, **characterized in that** the plastic layer (18) has a strength between 5 and 15 g/m².

4. The masking means of one of claims 1-3, **characterized in that** the plastic layer (18) is between 0.0055 and 0.016 mm thick.

5. The masking means of one of claims 1-4, **characterized in that** the sheeting (12) is folded in a plurality of layers, the width of the layers being approximately equal to the width of the absorbent material web (16), and the folded sheeting (12) and the coated material web (18) are wound in a roll in the longitudinal direction.

6. The masking means of one of claims 1-5, **characterized in that** the adhesive strip (22) is an adhesive tape on which the longitudinal edge (14) of the sheeting and the longitudinal edge (20) of the material web are adhered offset with respect to each other.

7. The masking means of claim 6, **characterized in that** an adhesive cover tape (24) is applied on the adhesive tape (22).

8. The masking means of claim 7, **characterized in that** the cover tape (24) is adhered on the adhesive tape (24) with a lateral offset.

9. The masking means of one of claims 1-8, **characterized in that** the absorbent material web (16) is printed.
